(19) Europäisches Patentamt
European Patent Office
Office européen des brevets

(11) **EP 2 490 828 B1**

(12) **EUROPÄISCHE PATENTSCHRIFT**

(45) Veröffentlichungstag und Bekanntmachung des Hinweises auf die Patenterteilung:
**09.03.2016 Patentblatt 2016/10**

(51) Int Cl.:
***C03C 17/34*** *(2006.01)*      ***C03C 17/42*** *(2006.01)*
***C23C 18/12*** *(2006.01)*      ***F21V 3/04*** *(2006.01)*
***G02B 1/115*** *(2015.01)*

(21) Anmeldenummer: **10768420.1**

(22) Anmeldetag: **20.10.2010**

(86) Internationale Anmeldenummer:
**PCT/EP2010/006397**

(87) Internationale Veröffentlichungsnummer:
**WO 2011/047840 (28.04.2011 Gazette 2011/17)**

(54) **EINRICHTUNG MIT VERMINDERTEN REIBEIGENSCHAFTEN**

DEVICE HAVING REDUCED FRICTION PROPERTIES

DISPOSITIF AUX PROPRIÉTÉS DE FROTTEMENT RÉDUITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2009 DE 102009050568**

(43) Veröffentlichungstag der Anmeldung:
**29.08.2012 Patentblatt 2012/35**

(73) Patentinhaber: **SCHOTT AG**
**55122 Mainz (DE)**

(72) Erfinder:
• **KRZYAK, Marta**
**31061 Alfeld (DE)**
• **WALTHER, Marten**
**31061 Alfeld (DE)**
• **KRACHT, Peter**
**37603 Holzminden (DE)**

(74) Vertreter: **Sawodny, Michael-Wolfgang**
**Dreiköniggasse 10**
**89073 Ulm (DE)**

(56) Entgegenhaltungen:
• **G. BLASEK: "VIP Tagungsbericht (13. Neues Dresdner Vakuumtechnisches Kolloquium am 13. und 14. Oktober 2005) - Modifizierung und Beschichtung von Kunststoffoberflächen", VAKUUM IN FORSCHUNG UND PRAXIS, Bd. 18, Nr. 1, 1. Februar 2006 (2006-02-01), Seiten 42-45, XP55000078, ISSN: 0947-076X, DOI: 10.1002/vipr.200690005**
• **WERNER M ET AL: "Nanotechnologien im Automobil. Innovationspotenziale in Hessen für die Automobil- und Zuliefer-Industrie", 20061201, 1. Dezember 2006 (2006-12-01), Seiten 1-52, XP007918672,**
• **COTEC GMBH: "Nanotechnologie für absolut hochwertige Oberflächen", EASY-TO-CLEAN DURALON ULTRATECH, COTEC GMBH TECHNICAL ALTERATIONS RESERVED, 18. Mai 2011 (2011-05-18), Seiten 1-2, XP007918663, [gefunden am 2011-05-18]**

EP 2 490 828 B1

**Beschreibung**

Die Erfindung betrifft eine Abdeckscheibe für eine Anzeigeeinrichtung oder Monitorvorsatzscheibe oder Oberfläche für Eingaben mit einem Substrat und einer auf das Substrat aufgebrachten Beschichtung, eine Verwendung einer derartigen Einrichtung sowie ein Verfahren zur Herstellung einer derartigen Einrichtung.

Aus der DE 198 48 591 A1 ist eine optische Scheibe bekannt geworden, die mit einer fluororganischen Verbindung versehen ist. Durch die Beschichtung mit einer fluororganischen Verbindung werden gemäß der DE 198 48 591 A1 Scheiben, insbesondere Windschutzscheiben, Fensterscheiben oder Scheinwerferscheiben von Fahrzeugen zur Verfügung gestellt, die sich durch hohe Kratzfestigkeit, verminderte Reibung gegenüber Luft, verbessertes Gleiten von Scheibenwischern sowie Schmutzabweisung auszeichnen. Die DE 198 48 591 A1 ist auf den Bereich konventioneller Scheiben beschränkt. Insbesondere ist nicht die im Bereich von Display-Scheiben wichtige Vermeidung von Fingerabdrücken beschrieben.

Aus der US 6,472,017 B2 ist ein spezielles Beschichtungssystem für ein Substrat bekannt geworden, das eine diamant-ähnliche Kohlenstoffschicht und eine Schicht aus Fluoralkylsilan umfasst. Die diamant-ähnliche Kohlenstoffschicht dient dazu die Haltbarkeit und/oder die Hydrophobität bereitzustellen. Die Fluoralkylsilanschicht dient dazu einen hohen Kontaktwinkel des Beschichtungssystems bereitzustellen. Auch die US 6,472,017 B2 beschreibt nicht die Vermeidung von Fingerabdrücken.

Die DE 198 29 172 A1 betrifft ein Verfahren zur Herstellung von Antireflexschichten auf Substraten, insbesondere zur Vergütung von optischen Bauteilen. Die Reibeigenschaften der Schicht werden in der DE 198 29 172A1 nicht angesprochen.

Aus der DE 10 2007 058 927 A1 ist ein Substrat mit einer Sol-Gel-Schicht und einer Barriereschicht sowie einer Entspiegelungsschicht bekannt geworden. Die Entspiegelungsschicht kann mit Sol-Gel-Verfahren aufgebracht werden. Die Beschichtung aus der DE 10 2007 058 927 A1 findet Verwendung als abriebfestes, umweltbeständiges Verbundmaterial auf dem Gebiet der Solarzellen. Reibwerte, insbesondere Werte der Startreibung sind in der DE 10 2007 058 927 A1 nicht beschrieben.

Aus der DE 39 41 797 A1 ist ein Schichtsystem mit einer hohen Antireflexwirkung für ein Substrat bekannt geworden, wobei das Schichtsystem mit Hilfe von CVD oder reaktivem Sputtern aufgebracht wird.

Die DE 102 13 036 A1 beschreibt die Beschichtung einer Kunststofffolie mit einer Mehrschicht- Interferenzbeschichtung, wobei die Mehrschicht-Interferenzbeschichtung für ein Antireflexsystem Verwendung finden kann.

Weder in der DE 39 41 797 A1 noch in der DE 102 13 036A1 sind Reibwerte für die Beschichtungssysteme angegeben.

Aus der EP 0 933 377 A2 ist eine schmutzabweisende Beschichtung aus einer siliziumorganischen Verbindung bekanntgeworden, die in einer nicht interaktiven Anzeigeeinrichtung, insbesondere einem Röhrenbildschirm eingesetzt werden kann.

In Band 3 der Schriftenreihe der Aktionslinie hessennanoteck, herausgegeben von der HA Hessen Agentur GmbH, 2006 ist die Beschichtung von nicht interaktiven Bauteilen wie Spiegeln und Scheinwerfern basierend auf Glasformteilen mit einer sehr leicht zu reinigenden Oberfläche aus fluororganischem Material gezeigt.

Beschichtete Substrate, gemäß den zuvor beschriebenen, weisen oft das Problem auf, dass die Oberflächen von diesen Beschichtungen trotz hoher Kontaktwinkel oftmals sehr rau sind. Dies führt dazu, dass bei Glasscheiben, die zum Beispiel im Bereich von Displays Verwendung finden, Kugelschreiber oder Stifte, kratzen, was zu einem unruhigen Schriftbild führt und im Übrigen die Oberfläche auch angreift. Gerade bei der Verwendung von Glasscheiben in Displayprodukten, die eine Touch-Panel Anwendung beinhalten, d.h. eine Oberfläche, bei der durch Berührung von Teilen der Oberfläche der Programmablauf eines technischen Gerätes direkt gesteuert werden kann, ist die oberste (Glas-)Oberfläche und ihre Eigenschaften wichtig.

Die oberste Glasoberfläche im Stand der Technik konnte aber aufgrund der zuvor aufgezeigten Probleme eine Schrift nicht sicher erkennen.

Des Weiteren waren die Glasoberflächen im Stand der Technik anfällig für Verschmutzung beispielsweise mit Fingerabdrücken. So musste im Stand der Technik zur Reinigung der Glasoberflächen Reinigungslösungen mit professionellen und kommerziellen Glasreinigungsmitteln verwandt werden.

Aufgabe der Erfindung ist es, die Nachteile im Stand der Technik zu vermeiden, insbesondere im Fall von Touch-Panel Anwendungen.

Insbesondere sollen Fingerabdrücke auf der Glasoberfläche weitgehend vermieden werden bzw. wenig sichtbar sein.

Erfindungsgemäß wird die Aufgabe durch eine Abdeckscheibe gemäß Anspruch 1 gelöst.

Die erfindungsgemäße Abdeckscheibe weist eine auf das Substrat aufgebrachte Beschichtung auf, wobei die Beschichtung an der Oberfläche einen Reibwert bzw. Reibkoeffizient (tan $\alpha$) im Bereich zwischen 0,01 und 0,12, insbesondere zwischen 0,02 und 0,1, ganz besonders bevorzugt zwischen 0,03 und 0,09 aufweist. Bei dem Reibwert handelt es sich um einen Reibwert, der auf einer schiefen Ebene ermittelt wird, die um einen Winkel $\alpha$ geneigt ist.

Der Winkel $\alpha$ bei dem ein auf der Ebene angeordnetes Gewicht ins Rutschen kommt, bestimmt den Reibwert. Insoweit handelt es sich bei dem Reibwert gemäß der Erfindung um einen Haftreibungs- oder Startreibungswert bzw. -koeffizient oder statischen Reibungskoeffizienten im Gegensatz zum Gleitreibungswert oder dynamischen Reibungskoeffizienten.

Die erfindungsgemäße Beschichtung sorgt dafür, dass die Oberfläche glatt erscheint beziehungsweise geglättet wird und ist insbesondere dadurch gekennzeichnet, dass der Reibwert bzw. Reibungskoeffizient herabgesetzt wird.

Ist eine Oberfläche mit einer Beschichtung gemäß der Erfindung versehen, so ist es beispielsweise möglich, auf dieser Oberfläche ein Eingabegerät ohne "Kratzen" oder störendes "Haften" zu bewegen, wie dies z.B. typischerweise bei einem Stift mit Kunststoffspitze oder einem Finger auf normalen Glasoberflächen geschieht. Ferner wird die Haftung von Schmutz oder Fingerabdrücke auf der Oberfläche deutlich herabgesetzt, so dass ein trockenes Reinigen dieser Verschmutzungen auf einer Oberfläche mit verminderter Haftung möglich ist. Dies ist insbesondere bei Touch-Panel-Anwendungen vorteilhaft.

Des Weiteren wird die Haftung beziehungsweise das Anhaften von organischen Substanzen, z. B. Ölen, insbesondere aber Hautfett auf einen mit der erfindungsgemäßen Beschichtung versehenen Substrat stark vermindert bzw. praktisch gänzlich verhindert, so dass Fingerabdrücke weitgehend vermieden werden bzw. zumindest weniger sichtbar sind. Da das Hautfett weniger bzw. praktisch gar nicht auf der Beschichtung haftet wird auch die Reinigung des Substrates mit einer erfindungsgemäßen Beschichtung erleichtert. In einer ganz bevorzugten Ausführungsform sind die Verunreinigungen mit organischen Stoffen bzw. von Hautfett sogar trocken abwischbar, d. h. auf die für organische Verunreinigungen obligatorischen Reinigungsmittel bei z. B. Displays oder TouchScreen-Panels kann verzichtet werden.

Die Abdeckscheibe umfasst des Weiteren eine Entspiegelungsbeschichtung.

Die Beschichtung umfassend die Entspiegelungsbeschichtung bzw. Antireflexbeschichtung weist bevorzugt einen Reibkoeffizient (tan $\alpha$) bzw. statischen Reibungskoeffizienten an der Oberfläche im Bereich zwischen 0,01 und 0,12, bevorzugt zwischen 0,02 und 0,1, ganz bevorzugt zwischen 0,03 und 0,09 auf. Dies wird in der Regel durch eine auf die Entspiegelungs- bzw. Antireflexbeschichtung aufgebrachte Deckschicht erreicht. Die Dicke der Deckschicht, die den Reibkoeffizient herabsenkt, liegt im Bereich < 20nm, bevorzugt < 10nm, insbesondere liegt sie im Bereich 0,1 nm bis 10nm.

Das Substrat ist bevorzugt eine Glasscheibe, insbesondere eine Kalk-Natron-Glasscheibe oder eine Borosilikatglasscheibe, die beispielsweise mittels Ziehverfahren, bspw. Updraw- oder Downdraw-Ziehverfahren oder der Floattechnologie oder aus einem Guß- oder Walzglas gewonnen wird. Speziell bei letzterem Verfahren, d.h. dem Guss- oder Walzverfahren, kann es sein, dass über eine Poliertechnologie die notwendige optische Güte der Oberfläche erzielt wird, die beispielsweise für eine Display-Vorsatzscheibe benötigt wird.

Alternativ kann das Substrat auch ein Kunststoffsubstrat sein.

Für Anwendungen bei Displaygläsern, insbesondere Touch-Panels oder Touch-Screens, kleiner Formate ist es bevorzugt, wenn das Substrat eine Dicke $\leq$ 1 mm aufweist und insbesondere ein Dünnstsubstrat ist. Besonders bevorzugt sind die Dünnstgläser D263, B270 oder Borofloat der SCHOTT AG.

Werden die Einrichtungen für Abdeckscheiben für Displays, optional auch als Touch-Panels oder Touch-Screens, für größere Flächen, beispielsweise Flächen mit mehr als 1 m$^2$ eingesetzt, so werden bevorzugt Substrate mit einer Dicke von 4 bis 6 mm verwandt, so dass eine mechanische Schutzfunktion des Displays mit übernommen wird.

Die Scheiben können sowohl Einfachscheiben wie auch Verbundscheiben sein. Eine Verbundscheibe umfasst beispielsweise zwei Scheiben, eine erste und eine zweite Scheibe, die beispielsweise mit einer PVB-Folie verbunden sind. Von den nach außen gerichteten Oberflächen der Verbundscheibe ist wenigstens eine Oberfläche mit einer erfindungsgemäßen, reibverminderten Oberfläche mit einem Reibkoeffizient bzw. statischen Reibkoeffizient (tan $\alpha$) im Bereich zwischen 0,01 und 0,12, insbesondere zwischen 0,02 und 0,1 ganz bevorzugt zwischen 0,03 und 0,09 ausgerüstet.

Um nicht nur eine hohe Ebenheit der Oberfläche sondern auch ein einfach mit flüssigen Reinigern zu reinigende Oberfläche zur Verfügung zu stellen, weisen die erfindungsgemäßen. Schichten Kontaktwinkel > 50 Grad, insbesondere > 70 Grad auf. Schichten mit Kontaktwinkeln > 50 Grad, insbesondere > 70 Grad, ermöglichen zusätzlich zur zuvor beschriebenen Trockenreinigung eine einfache Reinigung der Glasoberfläche von Verschmutzungen mittels flüssigen Reinigungsmitteln wie Glasreinigern oder Wasser. Für die gute Reinigbarkeit der erfindungsgemäßen Schichten bzw. Beschichtung, insbesondere der trockenen Reinigung, ist im Wesentlichen der verminderte Haftmechanismus verantwortlich, der beispielsweise durch einen kleinen Reibkoeffizienten ausgezeichnet ist. Die erfindungsgemäße Schicht bzw. Beschichtung weisen zwar ebenfalls hohe Kontaktwinkel auf, die sogar mehr als 100° erreichen können; entscheidend für die trockene Reinigbarkeit ist jedoch die niedrige Haftung der Verschmutzungen, insbesondere von organischen Verschmutzungen auf der Oberfläche der Beschichtung und nicht der hohe Kontaktwinkel.

Der primäre Einsatz der hier beschriebenen Einrichtungen mit einem Substrat und darauf aufgebrachter Beschichtung mit geringem Reibwert ist eine Verwendung als Abdeckscheibe, die eine mechanische Schutzfunktion und/oder Oberfläche für Eingaben, beispielsweise bei Anzeigevorrichtungen, sog. Displays, zur Verfügung stellt. Insbesondere findet die Einrichtung dort Anwendung, wo durch Berühren von Teilen der Oberfläche der Einrichtung technische Geräte bedient werden können, d.h. im Bereich der Touch-Panel-Anwendungen mit interaktiver Eingabe. Da eine derartige Scheibe zusätzliche Grenzflächen in das optische Gesamtsystem des Displays mit einbringt, wird bei Verwendung lediglich einer üblichen Floatglasscheibe als Substratmaterial ohne Entspiegelungsbeschichtung auf dem Display eine Reflektivität von ca. 8% erzielt. Diese Reflektivität stört den wirksamen Kontrast des Displays, da die Spiegelungen in Konkurrenz zum Nutzsignal des Displays treten. Aus diesem Grunde ist es insbesondere für diese Anwendung vorteilhaft, eine Entspiegelungsbeschichtung bzw. Antireflexbeschichtung auf das Substrat aufzubringen, d.h. eine entspiegelte Scheibe einzusetzen, deren Reflektivität $R_{VIS}$ im sichtbaren Wellenlängenbereich bei Normlicht D65 deutlich abgesenkt ist und vorzugsweise kleiner als 4% , besonders bevorzugt <2% ist. Diese Glas- oder Kunststoffscheibe umfasst dann eine Entspiegelungsbeschichtung, die auch als Antireflexbeschichtung bezeichnet wird, die einen der nachfolgenden Aufbauten aufweist beziehungsweise mit einem der nachfolgenden Auftragsverfahren aufgebracht wird:

a) die Entspiegelungsbeschichtung bzw. Antireflexbeschichtung wird mit Hilfe einer Flüssigtechnologie aufgebracht, wobei die mit Hilfe der Flüssigtechnologie aufgebrachte Schicht mit Hilfe einer der nachfolgenden Techniken zur Verfügung gestellt wird:

- die Entspiegelungsbeschichtung wird mit Hilfe der Sol-Gel-Technologie aufgebracht;
- die Entspiegelungsbeschichtung wird als einfache Interferenzbeschichtung aus der Sol-Gel-Technologie hergestellt;
- die Entspiegelungsbeschichtung wird als Mehrfach-Interferenzbeschichtung aus der Sol-Gel-Technologie hergestellt, wobei die Mehrfach-Interferenzbeschichtung insbesondere eine Dreifach- bis Siebenfach-Interferenzbeschichtung ist;
- die Entspiegelungsbeschichtung wird als Dreifach-Interferenzbeschichtung aus der Sol-Gel-Technologie hergestellt, wobei die erste Schicht eine Brechzahl zwischen 1,6 und 1,8, die zweite Schicht eine Brechzahl zwischen 1,9 und 2,5 und die dritte Schicht eine Brechzahl zwischen 1,4 und 1,5 aufweist.

b) die Entspiegelungsbeschichtung bzw. Antireflexbeschichtung wird mit Hilfe einer Hochvakuumtechnologie hergestellt, wobei die mit Hilfe der Hochvakuumtechnologie aufgebrachte Schicht mit einer der nachfolgenden Techniken zur Verfügung gestellt wird:

- die Entspiegelungsbeschichtung wird mit Hilfe einer Hochvakuumtechnologie als Mehrfach-Interferenzschichtsystem hergestellt, wobei die Mehrfach-Interferenzbeschichtung insbesondere eine Dreifach- bis Siebenfach-Interferenzbeschichtung ist;
- die Entspiegelungsbeschichtung wird mit Hilfe einer Hochvakuumtechnologie als Einfachschichtsystem hergestellt;
- die Entspiegelungsbeschichtung wird aus einem Sputterprozess unter Hochvakuum hergestellt;
- die Entspiegelungsbeschichtung wird aus einem Aufdampfprozess unter Hochvakuum hergestellt.

c) die Entspiegelungsbeschichtung bzw. Antireflexbeschichtung wird mit Hilfe eines CVD-Verfahrens hergestellt, wobei die mit Hilfe eines CVD-Verfahrens aufgebrachte Schicht mit einer der nachfolgenden Techniken zur Verfügung gestellt wird:

- die Entspiegelungsbeschichtung wird in einem Online-CVD-Prozess hergestellt;
- die Entspiegelungsbeschichtung wird in einem Offline-CVD-Prozess hergestellt;

d) die Entspiegelungsbeschichtung bzw. Antireflexbeschichtung wird mit Hilfe eines Ätzverfahrens hergestellt, wobei die mit Hilfe eines Ätzverfahrens aufgebrachte Schicht mit einer der nachfolgenden Techniken zur Verfügung gestellt wird:

- die Entspiegelungsbeschichtung wird mit Hilfe eines Ätzverfahrens als poröse Schicht hergestellt;
- die Entspiegelungsbeschichtung wird mit Hilfe eines Ätzverfahrens als lichtstreuende Oberfläche hergestellt.

Wird eine Entspiegelungsbeschichtung aufgebracht und die Entspiegelungsbeschichtung mit einer Deckschicht versehen, die einen statischen Reibkoeffizient (tan$\alpha$) im Bereich zwischen 0,01 und 0,12, bevorzugt zwischen 0,02 und 0,1 ganz besonders bevorzugt zwischen 0,03 und 0,09 aufweist, so wird die Entspiegelungsschicht beispielsweise durch Beimischung von Precursormaterialien oder Polymeren optisch an die Deckschicht angepasst, derart, dass eine Entspiegelungswirkung vorhanden ist. Die Entspiegelungswirkung ist derart, dass bei ein- und/oder zweiseitigem Auftrag die Reflektivität des Gesamtsystems zwischen 0,1% und 7%, bevorzugt zwischen 0,1% und 6%, insbesondere zwischen 0,1% und 5,5% besonders bevorzugt zwischen 0,1% und 4%, insbesondere zwischen 0,1% und 2% ganz bevorzugt zwischen 0,1% und 1,5% im sichtbaren Wellenlängenbereich bei Normlicht D65 liegt.

Besonders bevorzugt wird das erfindungsgemäße Substrat mit Beschichtung in einem der nachfolgenden Bereiche oder für eines der nachfolgenden Produkte eingesetzt:

- einer Schutzscheibe für Displays bzw. Anzeigevorrichtungen
- einer Abdeckscheibe für Displays;
- einer Abdeckscheibe für Touchpanels;
- einem Teil eines Touchscreens mit optischer Abtastung.
- innerhalb eines Displaysystems als Touchpanel zur interaktiven Eingabe von Signalen oder als Abdeck- und Schutzscheibe.

Neben der Einrichtung stellt die Erfindung auch ein Verfahren zur Herstellung einer Beschichtung mit einem Reibwert zwischen 0,01 und 0,12, insbesondere 0,02 und 0,1, ganz besonders bevorzugt 0,03 und 0,09 auf einem Substrat zur Verfügung, das die folgenden Schritte in einer ersten Ausführungsform umfasst:

- es wird eine Beschichtung, insbesondere eine Antireflexbeschichtung mit einer Flüssigtechnologie, insbesondere mit Sol-Gel-Technik oder mit Hochvakuumtechnologie oder mit Hilfe eines CVD-Verfahrens, wie zuvor beschrieben auf ein Substrat aufgebracht;
- das beschichtete Substrat wird in einem Unterdruckbehälter eingebracht, der auf Grobvakuum evakuiert wird.
- die auf das Substrat aufgebrachte Beschichtung wird in einem weiteren Verfahrensschritt bearbeitet, insbesondere zumindest lokal geglättet, derart, dass der Reibwert der Beschichtung zwischen 0,01 und 0,12, bevorzugt zwischen 0,02 und 0,1, ganz bevorzugt zwischen 0,03 und 0,09 liegt..

In einer besonders bevorzugten zweiten Ausführungsform wird bei dem erfindungsgemäßen Verfahren

- das beschichtete Substrat in einen Unterdruckbehälter eingebracht, der auf ein Vakuum im Bereich von 10 Pa bis 1050 hPa, vorzugsweise 10 hPa - 500 hPa, eingestellt wird, wobei vorzugsweise als Vakuum ein Feinvakuum im Bereich zwischen 10 Pa und 100 Pa oder ein Grobvakuum oberhalb 100 Pa evakuiert wird.;
- es wird auf die Beschichtung eine Deckschicht aufgebracht, derart, dass der Reibwert zwischen 0,01 und 0,12, bevorzugt zwischen 0,02 und 0,1, ganz bevorzugt zwischen 0,03 und 0,09 liegt. Hierbei wird die Beschichtung bevorzugt zumindest lokal geglättet..

Um den Reibwert der Beschichtung einzustellen" kann beispielsweise das ultrahydrophobe Beschichtungsmaterial "Duralon Ultratec" der Cotec GmbH, Frankenstraße 19, D-63791 Karlstein, Deutschland, gebunden in Form einer Tablette (14 mm Durchmesser, 5 mm Höhe) in einen Verdampfer gegeben werden, der sich in dem zuvor beschriebenen Unterdruckbehälter befindet. Aus diesem Verdampfer wird dann bei Temperaturen von 100°C bis 400°C das Beschichtungsmaterial aus dem Füllkörper der Tablette heraus verdampft und scheidet sich auf der Oberfläche des Substrates oder einer zuvor aufgebrachten Beschichtung, beispielsweise einer Antireflexbeschichtung bzw. Entspiegelungsschicht, als Deckschicht ab. Hierbei wird zur Verteilung des Beschichtungsmaterials bevorzugt eine Vorrichtung zum allseitigen Beschichten von Gegenständen, wie in der EP-A-1816232 offenbart, deren Offenbarung in die vorliegende Anmeldung voll umfänglich mit aufgenommen wird, eingesetzt. Die Zeit- und Temperaturprofile werden, wie von der Firma Cotec GmbH, Frankenstraße 19, D-63791 Karlstein, Deutschland, zum Verdampfen der Tablette des Materials "Duralon Ultratec" vorgegeben, eingestellt. Die Substrate, (unbeschichtet und/oder mit Antireflexbeschichtung) erreichen im Prozess eine leicht erhöhte Temperatur, die im Bereich zwischen 300K bis 370K liegen.

Die oben beschriebene Auftragsmethode liefert üblicherweise Deckschichten, die nur wenige nm, üblicherweise weniger als 10 nm dick sind und vorzugsweise nur eine monomolekulare Absättigung der Oberfläche der Beschichtung bzw. des Substrats darstellen. Werden auf Entspiegelungsbeschichtungen bzw. Antireflexbeschichtungen Deckschichten aufgetragen, so ändert sich die Dicke der Beschichtung oder der Brechungsindex des Gesamtsystems aus Beschichtung und Deckschicht. Um weiterhin eine gute Entspiegelung zu erreichen, ist es vorteilhaft, wenn das Gesamtsystem aus Entspiegelung und Deckschicht angepasst wird. Da die Deckschicht sehr dünn ist, muss bei derartig dünnen Deckschichten das optische System mit einer Antireflexschicht nur geringfügig angepasst werden, um den gewünschten Farbton der Restreflexion der Antireflexbeschichtung zu erreichen, beispielsweise durch einen geänderten Schichtaufbau. Dem Fachmann ist bekannt, wie dem oben beschriebenem Prozess Beimischungen zugefügt werden können, die z. B. eine höhere Schichtdicke als 10 nm für die Antireflexbeschichtung bewirken. Als Beispiel kann genannt werden, dass simultan mit der Verdampfung der Schicht niedriger Haftreibung eine zusätzliche Polymerverbindung verdampft wird, die eine durchsichtige Schicht hinterlässt. In diese Schicht wird dann das Material zur Verminderung der Haftreibung mit eingelagert und kann als Schicht mit mehr als 10 nm deutlich optische Wirkung erzielen. In diesem Fall soll die oberste Deckschicht beispielsweise aus dem Material mit niedrigem Reibkoeffizienten sowie die der Deckschicht benachbarte letzte Schicht des Antireflexsystems aus niedrigbrechendem Material, mit einer Brechzahl zwischen 1,37 und 1,6, als eine einzige Schicht angesehen werden, die zusammen in das Design des Antireflexsystems einberechnet wird. Als Beimischungen für die Deckschicht können als Precursormaterialien neben den oben erwähnten Polymeren diverse Materialien für bekannte CVD-Prozesse verwendet werden.

Die Erfindung soll nachfolgend anhand der Ausführungsbeispiele beschrieben werden:

Es zeigen:

Fig. 1 das Messprinzip zur Bestimmung des Reibwertes;

Fig. 2a-2b eine erfindungsgemäße Einrichtung, umfassend als Substratmaterial eine Einfachscheibe (Fig. 2a) und eine Verbundscheibe (Fig. 2b).

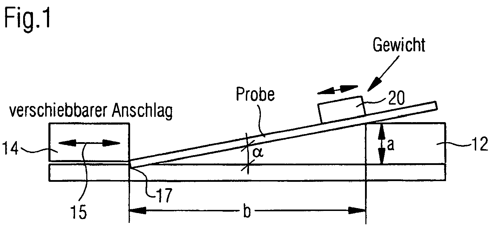

In Figur 1 ist das Messprinzip für die Messung des Reibwertes, wie er vorliegender Anmeldung zugrunde liegt und in Tabelle 1 für unterschiedliche Proben angegeben ist, dargestellt.

Eine zu untersuchende Glasscheibe, versehen mit einer Beschichtung, wird definiert in eine Schräglage gebracht und über die Kante eines Klotzes 12 mit Höhe a durch den verschiebbaren Anschlag 14 in Richtung 15 so verschoben, dass der Winkel der Schräge, der Winkel $\alpha$, immer größer wird. Beim Verschieben des Anschlages 14 ändert sich die Strecke b zwischen dem Auflagepunkt 17 und dem Klotz 12, hierdurch wird der Winkel $\alpha$ geändert. Die Höhe a des Klotzes 14 beträgt 15 mm. Für den Winkel $\alpha$ gilt die Beziehung:

$$\tan (\alpha) = a/b$$

Ein auf der Scheibe liegendes Gewichtsstück 20 kommt bei zunehmendem Winkel $\alpha$ ins Rutschen. Der Winkel, bei dem das Gewicht 20 auf der Glasscheibe ins Rutschen kommt, ist dann ein Maß für den Reibwert gemäß der Erfindung. Der Reibwert gemäß der Erfindung ist somit der Haftreibungs- oder Startreibungs- oder statische Reibungskoeffizient.

Als Gewicht 20 wird bevorzugt ein Quader aus "Delrin" (POM) mit Maßen 20 x 20 x 10 mm mit aufgelegtem Messingstück und einem Gesamtgewicht von 106 g eingesetzt.

Der Winkel $\alpha$ kann sehr einfach aus den Strecken b und a, wie oben beschrieben bestimmt werden. Bei festgegebener Höhe a und Bestimmung der Länge b, bei der der Klotz zu Rutschen beginnt, kann hieraus der Winkel $\tan \alpha$, der dem Reibkoeffizient, hier dem statischen Reibungskoeffizient entspricht, ermittelt werden.

Es wurden nachfolgende Proben vermessen und wie in Tabelle 1 angegeben, der Reibwert und der Kontaktwinkel für die Beispiele bestimmt.:

**Beispiel 1:**

**Muster 1:**

Bei der Probe gemäß Muster 1 wurde eine Antireflexbeschichtung nach dem Sol-Gel-Verfahren hergestellt.

Die Beschichtung besteht aus jeweils drei Einzelschichten und besitzt die Struktur:

$$\text{Substrat} + M + T + S.$$

Die mit T gekennzeichnete Einzelschicht enthält Titandioxid ($TiO_2$), die mit S gekennzeichnete Einzelschicht enthält Siliziumdioxid ($SiO_2$) und die mit M gekennzeichnete Einzelschicht wird jeweils aus S und T Mischlösungen gezogen. Das Floatglassubstrat wird vor der Beschichtung sorgfältig gereinigt. Die Tauchlösungen werden jeweils in auf 28° C klimatisierten Räumen bei einer Luftfeuchtigkeit von 5 bis 10 g/kg aufgetragen, die Ziehgeschwindigkeit betragen für die Einzelschichten M/T/S ca. 275/330/288 mm/min. Auf das Ziehen einer jeden Gelschicht folgt ein Ausheizprozess an Luft. Die Ausheiztemperatur und die Ausheizzeit betragen 180° C/20 min nach der Herstellung der ersten Gelschicht sowie 440° C/60 min nach der Herstellung der zweiten und dritten Gelschicht. Im Falle der T-Schichten setzt sich die Tauchlösung (pro Liter) zusammen aus:

68 ml Titan-M-Butylat, 918 ml Ethanol (ABS), 5 ml Acetylaceton und 9 ml Ethyl-Butylacetat.

Die Tauchlösung zur Herstellung der S-Schicht enthält:

125 ml Kieselsäuremethylester, 400 ml Ethanol (ABS), 75 ml $H_2O$ (destilliert), 7,5 ml Essigsäure und wird nach einer Ruhezeit von ca. 12 Stunden mit 393 ml Ethanol (ABS) verdünnt. Die Beschichtungslösungen zur Herstellung der Oxide mit mittlerem Brechungsindex werden durch Mischung der S + T-Lösungen präpariert. Die mit M gekennzeichnete Schicht wird aus einer Tauchlösung mit einem SiliziumdioxidGehalt von 5,5 g/l und einem Titandioxid-Gehalt von 2,8 g/l gezogen. Der angewandte nasschemische Sol-Gel-Prozess erlaubt als Tauchverfahren die wirtschaftliche Beschichtung großer Flächen.

Neben der mit Hilfe eines Sol-Gel-Verfahrens (Muster 1) hergestellten AntireflexBeschichtungen können auch mit Hilfe von Sputterprozessen AntireflexBeschichtungen aufgebracht werden.

Ein derartig beschichtetes System ist

**Beispiel 2:**

**Muster 2:**

Bei Beispiel-Muster 2 handelt es sich um eine einseitige Antireflexschicht, die nach dem Sputterverfahren wie folgt beschichtet wird:

Die Beschichtung wird in einer Durchlaufanlage mit einem MF-Sputterprozess durch Magnetronsputtern beschichtet, wobei das Substrat in einem sogenannten Carrier positioniert und auf diesem durch die Sputteranlage transportiert wird. Das Verfahren zum Auftrag ist wie folgt:

a.) Innerhalb der Beschichtungsanlage wird das Substrat zunächst zur Entwässerung "der Oberfläche auf ca. 150° C vorerwärmt". Anschließend wird ein Antireflex-System (beispielsweise bestehend aus vier Schichten) wie folgt hergestellt:

b.) Sputtern einer hochbrechenden Schicht mit einem Vorschub von 1,7 mm/min., wobei der Carrier vor der Sputterquelle pendelt und währenddessen eine Schicht von 30 nm Dicke abgeschieden wird.
Die Schichtherstellung erfolgt durch Zugabe von Argon und Reaktivgas unter Regelung des Reaktivgases auf eine Plasmaimpedanz. Der Prozessdruck wird insbesondere durch die Menge an Argon bestimmt, welcher zu typischen Prozessdrücken im Bereich zwischen 1 x E - 3 und 1 x E - 4 mbar führt. Die Abscheidung im Plasma erfolgt über eine Pulsung.

c.) Sputtern einer niedrigbrechenden Schicht mit einem Vorschub von 2,14 m/min. Hierbei wird eine Schicht der Dicke 30,5 nm hergestellt. Die Schichtherstellung erfolgt entsprechend der Abscheidung von Schicht 1.

d.) Sputtern einer hochbrechenden Schicht entsprechend Schicht 1. Hier wird bei einem Vorschub von 0,9 m/min eine Schicht der Dicke 54 nm hergestellt.

e.) Sputtern einer niedrigbrechenden Schicht gemäß Schicht 2. Bei einem Vorschub von 0,63 m/min wird eine Schicht der Dicke 103 nm hergestellt. Anschließend wird das beschichtete Substrat mit dem Carrier über eine Transferkammer ausgeschleust.

f.) Für das Herstellen der Probe wurde anschließend in einem zweiten Beschichtungsgang die Rückseite ebenfalls entspiegelt durch Beschichten der Rückseite der Probe gemäß den Schritten a.) bis d.)

Zusätzlich können Schichten, die gemäß Beispiel-Muster 1 beschichtet sind, mit ETC (Easy to clean)-Schichten beschichtet werden.
Derartige Systeme werden in Muster 3 angegeben.

**Beispiel 3:**

**Muster 3:**

Eine Schicht gemäß Muster 1 wird vorgereinigt über einer Waschmaschine und mit einem Neutralizer vorbehandelt, sodass die Beschichtung fettfrei ist.

Die so gereinigte Oberfläche wird mit dem Produkt ClearShield besprüht, das beispielsweise von der Fa. Bohle aus Haan (D) kommerziell angeboten wird und eine typische, fluorpolymere Lösung für ETC (Easy to Clean)Anwendungen darstellt. Die mit ClearShield besprühte Fläche wird bei Raumtemperatur ca. 10 bis 15 Minuten einwirken gelassen. Danach wird die beschichtete Fläche gewaschen und getrocknet.

Durch die Beschichtung mit einer ETC(Easy to Clean)-ClearShield-Schicht kann der Kontaktwinkel deutlich verbessert werden gegenüber unbehandelten Proben, wie Muster 1 oder Muster 2.

Diese Verbesserung des Kontaktwinkels ist aus Tabelle 2 zu entnehmen.

Allerdings bedeutet eine Erhöhung des Kontaktwinkels von 23 beziehungsweise 46 Grad bei Muster 1 bzw. Muster 2 auf 78 Grad bei Muster 3 nicht, dass der entsprechende Reibwert erreicht wird und damit ein Finger oder Stift leichter über die Oberfläche gleitet oder eine Trockenreinigung ermöglicht wird.

Um dies zu erreichen, ist es erfindungsgemäß notwendig, die Schicht gemäß Muster 1 in einem Prozess nachzubehandeln bzw. wie zuvor beschrieben, eine Deckschicht als Glättschicht auf die Antireflexschicht aufzubringen. Dies ist im Muster 4 angegeben.

**Beispiel 4:**

**Muster 4:**

Bei der für Muster 4 angegebenen Beschichtung handelt es sich wiederum um eine Beschichtung gemäß Muster 1, die einer Nachbehandlung unterzogen wird. Bei der Nachbehandlung wird die Beschichtung gemäß Muster 1 in einem Prozess mit Vakuum nachbehandelt. Hierbei werden die beschichteten Gläser gemäß Muster 1 in einen Unterdruckbehälter eingebracht, der anschließend auf Grobvakuum evakuiert wird.

Um eine Herabsetzung des Reibungskoeffizienten beziehungsweise Glättung der Beschichtung beispielsweise mit einer Deckschicht vorzunehmen, kann beispielsweise das ultrahydrophobe Beschichtungsmaterial "Duralon Ultratec" der Cotec GmbH, Frankenstraße 19, D-63791 Karlstein, Deutschland, gebunden in Form einer Tablette (14 mm Durchmesser, 5 mm Höhe) in einen Verdampfer gegeben werden, der sich in dem zuvor beschriebenen Unterdruckbehälter befindet. In diesem Verdampfer wird dann bei Temperaturen von 100°C bis 400°C das Beschichtungsmaterial aus dem Füllkörper der Tablette heraus verdampft und scheidet sich auf der Oberfläche des Substrates oder einer zuvor aufgebrachten Beschichtung, beispielsweise einer Antireflexbeschichtung, als Deckschicht ab. Hierbei wird zur Verteilung des Beschichtungmaterials bevorzugt eine Vorrichtung zum allseitigen Beschichten von Gegenständen, wie in der EP-A-1816232 offenbart, deren Offenbarung in die vorliegende Anmeldung voll umfänglich mit aufgenommen wird, eingesetzt. Die Zeit- und Temperaturprofile werden, wie von der Firma Cotec GmbH, Frankenstraße 19, D-63791 Karlstein, Deutschland, zum Verdampfen der Tablette des Materials "Duralon Ultratec" vorgegeben, eingestellt. Die Substrate, (unbeschichtet und/oder mit Antireflexbeschichtung) erreichen im Prozess eine leicht erhöhte Temperatur, die im Bereich zwischen 300K bis 370K liegen.

Wie aus Tabelle 1 hervorgeht, wird durch die Nachbehandlung, wie zuvor beschrieben, ein Reibwert bzw. ein Haftreibungskoeffizient von tan $\alpha$ = 0,07, der im Bereich 0,01 bis 0,12 liegt, erreicht.

Wie des Weiteren aus Tabelle 2 hervorgeht, ist der Kontaktwinkel für Muster 4 hoch, nämlich über 100 Grad.

Des Weiteren geht aus der Tabelle 1 hervor, dass ein Reibwert bzw. Haftreibungskoeffizienten von 0,07, das heißt zwischen 0,01 und 0,12 erreicht wird, wohingegen die nicht mit einer zusätzlichen Deckschicht behandelten Proben - Muster 1 - Muster 3 - Reibwerte bzw. Haftreibungskoeffizienten von oberhalb 0,12, bevorzugt im Bereich von 0,16 bis 0,2 aufweisen.

Die Ergebnisse der Untersuchungen zu den Reibwerten und Kontaktwinkeln sind in den nachfolgenden Tabellen angegeben.

Tabelle 1: Reibwerte der Proben Beispiele: Muster 1 - Muster 4

| Probe | | 1 | 2 | 3 | 4 | 5 | 1 | 2 | 3 | 4 | 5 | | |
|---|---|---|---|---|---|---|---|---|---|---|---|---|---|
| | | Strecke b / mm | | | | | Reibwert (tan $\alpha$) | | | | | Mittelwert | Streuung |
| Muster 1 | geputzt | 95 | 90 | 90 | 95 | 60 | 0,16 | 0,17 | 0,17 | 0,16 | 0,25 | 0,18 | 0,04 |
| Muster 2 | geputzt | 90 | 80 | 90 | 100 | 90 | 0,17 | 0,19 | 0,17 | 0,15 | 0,17 | 0,17 | 0,01 |
| Muster 3 | geputzt | 100 | 95 | 90 | 90 | 90 | 0,15 | 0,16 | 0,17 | 0,17 | 0,17 | 0,16 | 0,01 |
| Muster 4 | geputzt | 190 | 210 | 260 | 250 | 250 | 0,08 | 0,07 | 0,06 | 0,06 | 0,06 | 0,07 | 0,01 |

Die Reibwerte wurden bzw. die Haftreibungskoeffizienten wurden wie zuvor beschrieben durch Bestimmung des tan (α) durch Verschieben der Glasplatte über einen Klotz mit einer Höhe a von beispielsweise 15mm bestimmt.

Die Ergebnisse betreffend die Kontaktwinkel sind in Tabelle 2 angegeben.

Tabelle 2:

| Probe | Kontaktwinkel [°] | |
|---|---|---|
| | Mittelwert | Streuung |
| Muster 1 | 23 | 0,63 |
| Muster 2 | 46 | 1,67 |
| Muster 3 | 78 | 1,02 |
| Muster 4 | 107 | 0,40 |

Für die Kontaktwinkelmessungen wurden die Proben beidseitig mit Ethanol gereinigt. Anschließend wurde der Kontaktwinkel mittels des Gerätes PCA 100M/4 der Fa. DataPhysics vermessen. Die Methode wurde als statische Kontaktwinkelmessung nach dem Sessile Drop Verfahren mit deionisiertem Wasser und einem Tropfenvolumen von 3,5 μl durchgeführt. Zur Auswertung wurden 5 Messungen durchgeführt und anschließend als Messwert der Mittelwert aus den 5 Messungen angegeben.

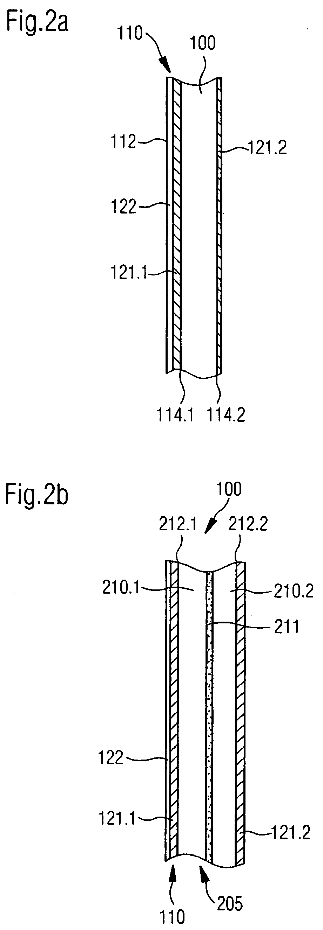

In Figur 2a und 2b wird ein Schichtsystem gemäß der Erfindung gezeigt. Das dargestellte Schichtsystem gemäß Figur 2a umfasst ein als Einfachscheibe ausgebildetes Substrat 100 sowie eine auf einer Seite 114.1 aufgebrachten Beschichtung 110, umfassend eine Antireflexbeschichtung 121.1, auf die vorliegend noch eine Deckschicht 122 wie in Beispiel 4 (Muster 4) beschrieben aufgebracht wird. Die Deckschicht 122 weist an der nach außen gerichteten Oberfläche 112 einen Reibkoeffizienten im Bereich 0,01 bis 0,12, insbesondere zwischen 0,02 und 0,1 bevorzugt zwischen 0,03 und 0,09 auf. Dies führt dazu, dass ein Finger oder Stift leicht über die Oberfläche einer derartigen Probe gleiten kann, was insbesondere bei Anwendungen im Touchscreen- oder Displaybereich von Vorteil ist.

Insbesondere wird das Anhaften von organischen Verunreinigungen, insbesondere Hautfett, vermindert. Hierdurch werden Fingerabdrücke auf dem Touchscreen bzw. Display verhindert bzw. deren Reinigung erleichtert bis hin zur Trockenreinigung.

Auf der anderen d. h. gegenüberliegenden Seite, insbesondere der Rückseite 114.2 des Substrates 100 kann sich eine zweite Antireflexschicht 121.2" befinden, derart, dass im Gesamtsystem eine sehr kleine Reflektivität von $R_{vis}$ < 4%, bevorzugt <2% erreicht wird. Technisch relevant sind hierbei Reflektivitäten $R_{vis}$ >0,2%, d.h. die Reflektivität $R_{vis}$ im sichtbaren Wellenlängenbereich bei Normlicht D65 liegt für das Gesamtsystem im Bereich zwischen 4 % und 0,2 %, bevorzugt zwischen 2 % und 0,2 %. Die Antireflexbeschichtung wird oft auch als Entspiegelungsbeschichtung bezeichnet.

Das Substrat ist bevorzugt eine Einfach-Glasscheibe, insbesondere eine Kalk-Natron-Glasscheibe oder ein Borosilikatglas. Die Einfach-Glasscheibe kann beispielsweise mittels Ziehverfahren, bspw. Updraw- oder Downdraw-Ziehverfahren oder der Floattechnologie oder aus einem Guss- oder Walzglas gewonnen werden. Speziell bei letzterem Verfahren, d.h. dem Guss- oder Walzverfahren, kann es sein, dass über eine Poliertechnologie die notwendige optische Güte der Oberfläche erzielt wird, die beispielsweise für eine Display-Vorsatzscheibe benötigt wird.

Alternativ zu einer Einfachscheibe kann das Schichtsystem, wie in Figur 2b gezeigt, auch eine Verbundscheibe als Substrat umfassen. Gleiche Bauelemente wie in Figur 2a sind mit denselben Bezugsziffern belegt. Das Substrat 100 umfasst als Verbundscheibe 205 eine erste Scheibe 210.1 und eine zweite Scheibe 210.2. Erste und zweite Scheibe 210.1, 210.2 sind mittels einer Folie 211, z. B. einer PVB-Folie, zu einem Verbund laminiert. Wenigstens eine der nach außen gerichteten Oberfläche 212.1 und 212.2 der ersten Scheibe 210.1 bzw. der zweiten Scheibe 210.2 umfasst eine Deckschicht 122 mit niedrigem Reibkoeffizient, d. h. niedrigem statischen Reibungskoeffizient. Vorliegend ist auf die Oberfläche 212.1 der ersten Scheibe 210.1 eine Beschichtung 110, umfassend eine erste Antireflexschicht 121.1 und die Deckschicht 122 aufgebracht. Auf der Außenseite 212.2 der zweiten Scheibe 210.2 ist ebenfalls eine zweite Antireflexschicht 121.2 vorgesehen, um im Gesamtsystem sehr kleine Reflektivitäten $R_{vis}$ zu erreichen.

Alternativ kann das Substrat auch ein Kunststoffsubstrat sein.

Für Anwendungen bei Displaygläsern kleiner Formate ist es bevorzugt, wenn das Substrat eine Dicke ≤ 1 mm aufweist und insbesondere ein Dünnstsubstrat bzw. Dünnstglas ist. Besonders bevorzugt sind die Dünnstgläser D263, B270 oder Borofloat der SCHOTT AG.

Werden die Einrichtungen für Displaygläser für größere Flächen, beispielsweise Flächen mit mehr als 1 m² eingesetzt, so werden bevorzugt Substrate mit einer Dicke von 3 bis 6 mm verwandt.

Durch die Nachbehandlung in einem Grob-/Feinvakuum gemäß dem erfindungsgemäßen Verfahren wie in Beispiel 4 beschrieben gelingt es, Substrat mit Reibkoeffizienten im Bereich 0,01 bis 0,12 herzustellen, was insbesondere bei der Verwendung derartig beschichteter Gläser im Bereich Touchscreen oder Display Vorteile bezüglich des Gleitens von Fingern oder Stiften über Oberflächen hat. Derartige Schichten mit sehr niedrigen Haftkoeffizienten weisen auch eine schlechte Haftung von Schmutz auf der Oberfläche auf, so dass Verschmutzungen wie z.B. Fingerabdrücke trocken mit einem Tuch leicht entfernt werden können

In besonderen Ausführungen der Anwendung sollen auf dem erfindungsmäßig beschriebenen Substrat noch zusätzliche Komponenten befestigt werden, die typischerweise in der Anwendung als Displayabdeckung verwendet werden. Als Beispiele sind hier rückseitige Haltesysteme, z.B. aus Metall oder vorderseitig angebrachte optische Ankopplungselemente zu nennen. Standardmäßig werden diese Elemente durch eine Verklebung aufgebracht. Da die beschriebenen Schichten mit niedrigem Reibkoeffizienten auch eine schlechte Haftung für Klebeverbindungen aufweisen, ist es in diesen Fällen vorteilhaft, die zu verklebenden Stellen von dem beschriebenem Beschichtungsprozess auszunehmen. Dazu kann die betreffende Fläche maskiert werden, beispielsweise durch eine Adhäsionsfolie oder auch durch einen Abziehlack in Siebdrucktechnik. Dieses Maskieren bewirkt, dass die Schichtbildung zu der Oberfläche des Substrates, mit ggf. darüberliegender Antireflexbeschichtung verhindert wird und der Klebeprozess auf Teilflächen angewendet wird, die nicht der Bedingung genügen, dass der Reibkoeffizient sehr klein ist. Vorzugsweise werden diese maskierten Bereiche dann in Ausschnitte des Substrates gelegt, die in der Anwendung nicht sichtbar sind; beispielsweise wäre dies eine Gehäuseabdeckung.

Sätze

Die Erfindung umfasst Aspekte, die in nachfolgenden Sätzen dargestellt sind, die Teil der Beschreibung sind, aber keine Sätze in Übereinstimmung mit J15/88 der Beschwerdekammer.

1. Einrichtung, insbesondere Abdeckscheibe für eine Anzeigeeinrichtung oder Monitorvorsatzscheibe oder Oberfläche für Eingaben umfassend
ein Substrat;
eine auf das Substrat (100) aufgebrachte Beschichtung (110),
dadurch gekennzeichnet, dass
die Beschichtung (110) eine Oberfläche (112) mit einem Reibwert (tan $\alpha$) im Bereich zwischen 0,01 und 0,12, insbesondere 0,02 und 0,1, ganz bevorzugt 0,03 und 0,09 aufweist.

2. Einrichtung gemäß Satz 1,
dadurch gekennzeichnet, dass
die Beschichtung derart gewählt wird, dass das Anhaften organischer Substanzen, insbesondere von Ölen und Hautfett weitgehend vermieden wird.

3. Einrichtung nach einem der Sätze 1 bis 2,
dadurch gekennzeichnet, dass
die Beschichtung (110) wenigstens eine Entspiegelungsbeschichtung (121.1) umfasst und die Beschichtung (110) eine Deckschicht (122) aufweist, die über der Entspiegelungsbeschichtung (121.1) angeordnet ist und die Oberfläche (112) der Deckschicht einen Reibkoeffizient (tan $\alpha$) im Bereich zwischen 0,01 und 0,12, insbesondere 0,02 und 0,1, ganz bevorzugt 0,03 und 0,09 aufweist.

4. Einrichtung gemäß Satz 3,
dadurch gekennzeichnet, dass
die Deckschicht (122) eine Dicke < 20 nm, insbesondere kleiner 10 nm, bevorzugt im Bereich 0,1 nm bis 10 nm aufweist.

5. Einrichtung gemäß einem der Sätze 3 bis 4,
dadurch gekennzeichnet, dass
die Entspiegelungsschicht (121.1) optisch an die Deckschicht (122) angepasst ist, derart, dass eine Entspiegelungswirkung bereitgestellt wird.

6. Einrichtung gemäß Satz 4 oder 5,
dadurch gekennzeichnet, dass
die Brechzahl der Beschichtung (110) zwischen beziehungsweise Deckschicht 1,37 und 1,6 liegt.

7. Einrichtung nach einem der Sätze 1 bis 6,
dadurch gekennzeichnet, dass

das Substrat (100)

- eine Glasscheibe, insbesondere eine Kalk-Natron-Glasscheibe oder eine Borosilikatglasscheibe, die mittels Ziehverfahren, Floattechnologie oder einem Guss- oder Walzglas gewonnen wird oder
- ein Kunststoffsubstrat, insbesondere ein Plexiglassubstrat oder
- eine Verbundglasscheibe (205).

ist.

8. Einrichtung nach einem der Sätze 1 bis 7,
dadurch gekennzeichnet, dass
das Substrat (100) eine Dicke im Bereich zwischen 0,05 mm und 10 mm, insbesondere zwischen 0,05 mm und 8 mm, ganz bevorzugt im Bereich 0,05 mm bis 3 mm, aufweist

9. Einrichtung gemäß einem der Sätze 1 bis 8,
dadurch gekennzeichnet, dass
die Beschichtung (110) an der nach außen gerichteten Oberfläche (112) einen Kontaktwinkel > 50°, insbesondere > 70°, besonders vorzugsweise > 80° aufweist.

10. Einrichtung nach einem der Sätze 1 bis 9,
dadurch gekennzeichnet, dass
das Substrat (100) scheibenförmig ist mit einer ersten (114.1) und einer zweiten Seite (114.2) und die Beschichtung (110) auf die erste (114.1) und/oder zweite Seite (114.2) des scheibenförmigen Substrates aufgebracht ist.

11. Einrichtung gemäß Satz 10,
dadurch gekennzeichnet, dass
die Beschichtung auf der ersten und/oder zweiten Seite (114.1, 114.2) eine Entspiegelungsbeschichtung (121.1, 121.2) umfasst und die Reflektivität $R_{vis}$ des Gesamtsystems zwischen 0,1 % und 7 %, bevorzugt zwischen 0,1 % und 6 %, insbesondere zwischen 0,1 % und 5,5 %, besonders bevorzugt zwischen 0,1 % und 4 %, insbesondere zwischen 0,1 % und 2 %, ganz bevorzugt zwischen 0,1 % und 1,5 %, liegt.

12. Einrichtung nach einem der Sätze 1 bis 11,
dadurch gekennzeichnet, dass
die Entspiegelungsbeschichtung einen der nachfolgenden Aufbauten umfasst beziehungsweise mit nachfolgenden Auftragsverfahren aufgebracht wird:

a) die Entspiegelungsbeschichtung wird mit Hilfe einer Flüssigtechnologie aufgebracht, wobei die mit Hilfe der Flüssigtechnologie aufgebrachte Schicht mit Hilfe eine der nachfolgenden Techniken zur Verfügung gestellt wird:

- die Entspiegelungsbeschichtung wird mit Hilfe der Sol-Gel-Technologie aufgebracht;
- die Entspiegelungsbeschichtung wird als einfache Interferenzbeschichtung aus der Sol-Gel-Technologie hergestellt;
- die Entspiegelungsbeschichtung wird als Mehrfach-Interferenzbeschichtung aus der Sol-Gel-Technologie hergestellt, wobei die Mehrfach-Interferenzeschichtung insbesondere eine Dreifach- bis Siebenfach-Interferenzbeschichtung ist;
- die Entspiegelungsbeschichtung wird als Dreifach-Interferenzbeschichtung aus der Sol-Gel-Technologie hergestellt, wobei die erste Schicht eine Brechzahl zwischen 1,6 und 1,8, die zweite Schicht eine Brechzahl zwischen 1,9 und 2,5 und die dritte Schicht eine Brechzahl zwischen 1,4 und 1,5 aufweist.

b) die Entspiegelungsbeschichtung wird mit Hilfe einer Hochvakuumtechnologie hergestellt, wobei die mit Hilfe der Hochvakuumtechnologie aufgebrachte Schicht mit einer der nachfolgenden Techniken zur Verfügung gestellt wird:

- die Entspiegelungsbeschichtung wird mit Hilfe einer Hochvakuumtechnologie als Mehrfach-Interferenzschichtsystem hergestellt, wobei die Mehrfach-Interferenzbeschichtung insbesondere eine Dreifach- bis Siebenfach-Interferenzbeschichtung ist;
- die Entspiegelungsbeschichtung wird mit Hilfe einer Hochvakuumtechnologie als Einfachschichtsystem hergestellt;

- die Entspiegelungsbeschichtung wird aus einem Sputterprozess unter Hochvakuum hergestellt;
- die Entspiegelungsbeschichtung wird aus einem Aufdampfprozess unter Hochvakuum hergestellt.

c) die Entspiegelungsbeschichtung wird mit Hilfe eines CVD-Verfahrens hergestellt, wobei die mit Hilfe eines CVD-Verfahrens aufgebrachte Beschichtung mit einer der nachfolgenden Techniken zur Verfügung gestellt wird:

- die Entspiegelungsbeschichtung wird aus einem Online-CVD-Prozess hergestellt;
- die Entspiegelungsbeschichtung wird aus einem Offline-CVD-Prozess hergestellt;

d) die Entspiegelungsbeschichtung wird mit Hilfe eines Ätzverfahrens hergestellt, wobei die mit Hilfe eines Ätzverfahrens aufgebrachte Schicht mit einer der nachfolgenden Techniken zur Verfügung gestellt wird:

- die Entspiegelungsbeschichtung wird mit Hilfe eines Ätzverfahrens als poröse Schicht hergestellt;
- die Entspiegelungsbeschichtung wird mit Hilfe eines Ätzverfahrens als lichtstreuende Oberfläche hergestellt.

13. Verwendung einer Einrichtung nach einem der Sätze 1 bis 12, in einem der nachfolgenden Bereiche oder für eines der nachfolgenden Produkte:

- einer Abdeckscheibe für Displays; Anzeigeeinrichtungen;
- einem Teil eines Touchpanels;
- einem Teil eines Touchscreens mit optischer Abtastung.
- innerhalb eines Displaysystems als Touchpanel zur interaktiven Eingabe von Signalen. oder als Abdeck- und Schutzscheibe
- einer Schutzscheibe für Displays, Anzeigeeinrichtungen, Touchscreens.

14. Verfahren zur Herstellung einer Einrichtung mit verminderten Reibeigenschaften, insbesondere Abdeckscheibe für eine Anzeigeeinrichtung oder Monitorvorsatzscheibe oder Oberfläche für Eingaben umfassend die Schritte:

- Bereitstellen eines Substrates
- das beschichtete Substrat wird in einem Unterdruckbehälter eingebracht, der auf Grobvakuum evakuiert wird.
- die auf das Substrat aufgebrachte Beschichtung wird in einem weiteren Verfahrensschritt bearbeitet beziehungsweise geglättet, derart, dass der Reibwert der Beschichtung zwischen 0,01 und 0,12, bevorzugt zwischen 0,02 und 0,1, ganz bevorzugt 0,03 und 0,09 liegt.

15. Verfahren zur Herstellung einer Einrichtung mit verminderten Reibeigenschaften, insbesondere für eine Anzeigeeinrichtung oder Monitorvorsatzscheibe oder Oberfläche für Eingaben umfassend die Schritte:

- Bereitstellen eines Substrates
- eine Beschichtung, insbesondere eine Antireflexbeschichtung beziehungsweise Entspiegelungsbeschichtung wird mit einer Flüssigtechnologie, insbesondere mit Sol-Gel-Technik oder mit Hochvakuumtechnologie oder mit Hilfe eines CVD-Verfahrens, auf das Substrat aufgebracht;
- das beschichtete Substrat wird in einen Unterdruckbehälter eingebracht, der auf ein Vakuum im Bereich von 10 Pa bis 1050 hPa, vorzugsweise 10 hPa - 500 hPa, eingestellt wird, wobei vorzugsweise als Vakuum ein Feinvakuum im Bereich zwischen 10 Pa und 100 Pa oder ein Grobvakuum oberhalb 100 Pa evakuiert wird;
- es wird auf die Beschichtung eine Deckschicht aufgebracht, derart, dass der Reibwert zwischen 0,01, und 0,12, bevorzugt zwischen 0,02 und 0,1, ganz bevorzugt zwischen 0,03 und 0,09 liegt.

16. Verfahren nach einem der Sätze 14 bis 15,
dadurch gekennzeichnet, dass
zur Verminderung des Reibwertes der Beschichtung ein ultrahydrophobes Beschichtungsmaterial in einen Verdampfer gegeben wird, der sich in dem Unterdruckbehälter befindet und aus dem Verdampfer das ultrahydrophobe Beschichtungsmaterial verdampft wird und sich anschließend auf der Oberfläche des Substrates niederschlägt oder auf einer Beschichtung, insbesondere einer Antireflexbeschichtung bzw. Entspiegelungsschicht, eine Deckschicht ausbildet, so dass das Substrat oder die Deckschicht einen Reibwert zwischen 0,01 und 0,12, bevorzugt zwischen 0,02 und 0,1, insbesondere bevorzugt zwischen 0,03 und 0,09 liegt.

17. Verfahren nach Satz 16,

dadurch gekennzeichnet, dass
die Temperatur im Verdampfer zwischen 100° C und 400° C liegt.

18. Verfahren nach einem der Sätze 14 bis 17,
dadurch gekennzeichnet, dass
die Substrate eine Temperatur zwischen 300 K und 370 K aufweisen.

19. Verfahren nach einem der Sätze 15 bis 18,
dadurch gekennzeichnet, dass
die Dicke der Deckschicht < 20 nm, insbesondere < 10 nm ist, bevorzugt im Bereich 0,1 nm bis 10 nm liegt.

20. Verwendung eines Verfahrens nach einem der Sätze 14 bis 19 bei der Herstellung eines der nachfolgenden Produkte:

- einer Abdeckscheibe für Displays, Anzeigeeinrichtungen;
- einem Teil eines Touchpanels;
- einem Teil eines Touchscreens mit optischer Abtastung
- innerhalb eines Displaysystems als Touchpanel zur interaktiven Eingabe von Signalen oder als Abdeck- und Schutzscheibe
- einer Schutzscheibe für Displays, Anzeigeeinrichtungen, Touchscreens.


**Patentansprüche**

1. Abdeckscheibe für eine Anzeigeeinrichtung oder Monitorvorsatzscheibe oder Oberfläche für Eingaben umfassend ein Substrat;
eine auf das Substrat (100) aufgebrachte Beschichtung (110),
**dadurch gekennzeichnet, dass**
die Beschichtung (110) wenigstens eine Entspiegelungsbeschichtung (121.1) umfasst und die Beschichtung (110) eine Deckschicht (122) aufweist, die über der Entspiegelungsbeschichtung (121.1) angeordnet ist und die Oberfläche (112) der Deckschicht einen Reibkoeffizient (tan $\alpha$) im Bereich zwischen 0,01 und 0,12, insbesondere 0,02 und 0,1, ganz bevorzugt 0,03 und 0,09 aufweist wobei
das Substrat (100) scheibenförmig ist mit einer ersten (114.1) und einer zweiten Seite (114.2) und die Beschichtung (110) umfassend die Entspieglungsbeschichtung (121.1, 121.2) auf die erste (114.1) und/oder zweite Seite (114.2) des scheibenförmigen Substrates aufgebracht ist und die Reflektivität $R_{vis}$ des Gesamtsystems zwischen 0,1 % und 7 % liegt.

2. Abdeckscheibe gemäß Anspruch 1,
**dadurch gekennzeichnet, dass**
die Beschichtung derart gewählt wird, dass das Anhaften organischer Substanzen, insbesondere von Ölen und Hautfett weitgehend vermieden wird.

3. Abdeckscheibe für eine Anzeigeeinrichtung oder Monitorvorsatzscheibe oder Oberfläche für Eingaben gemäß einem der Ansprüche 1 bis 2,
**dadurch gekennzeichnet, dass**
die Deckschicht (122) eine Dicke < 20 nm, insbesondere kleiner 10 nm, bevorzugt im Bereich 0,1 nm bis 10 nm aufweist.

4. Abdeckscheibe für eine Anzeigeeinrichtung oder Monitorvorsatzscheibe oder Oberfläche für Eingaben gemäß einem der Ansprüche 1 bis 3,
**dadurch gekennzeichnet, dass**
die Entspiegelungsschicht (121.1) optisch an die Deckschicht (122) angepasst ist, derart, dass eine Entspiegelungswirkung bereitgestellt wird.

5. Abdeckscheibe für eine Anzeigeeinrichtung oder Monitorvorsatzscheibe oder Oberfläche für Eingaben gemäß Anspruch 1 oder 4,
**dadurch gekennzeichnet, dass**
die Brechzahl der Beschichtung (110) behungsweise Deckschicht zwischen 1,37 und 1,6 liegt.

**6.** Abdeckscheibe für eine Anzeigeeinrichtung oder Monitorvorsatzscheibe oder Oberfläche für Eingaben nach einem der Ansprüche 1 bis 5, **dadurch gekennzeichnet, dass** das Substrat (100)

- eine Glasscheibe, insbesondere eine Kalk-Natron-Glasscheibe oder eine Borosilikatglasscheibe, die mittels Ziehverfahren, Floattechnologie oder einem Guss- oder Walzglas gewonnen wird oder
- ein Kunststoffsubstrat, insbesondere ein Plexiglassubstrat oder
- eine Verbundglasscheibe (205).

ist.

**7.** Abdeckscheibe für eine Anzeigeeinrichtung oder Monitorvorsatzscheibe oder Oberfläche für Eingaben nach einem der Ansprüche 1 bis 6,
**dadurch gekennzeichnet, dass**
das Substrat (100) eine Dicke im Bereich zwischen 0,05 mm und 10 mm, insbesondere zwischen 0,05 mm und 8 mm, ganz bevorzugt im Bereich 0,05 mm bis 3 mm, aufweist

**8.** Abdeckscheibe für eine Anzeigeeinrichtung oder Monitorvorsatzscheibe oder Oberfläche für Eingaben gemäß einem der Ansprüche 1 bis 7,
**dadurch gekennzeichnet, dass**
die Beschichtung (110) an der nach außen gerichteten Oberfläche (112) einen Kontaktwinkel > 50°, insbesondere > 70°, besonders vorzugsweise > 80° aufweist.

**9.** Abdeckscheibe gemäß einem der Ansprüche 1 bis 8,
**dadurch gekennzeichnet, dass**
die Reflektivität $R_{VIS}$ des Gesamtsystems zwischen 0,1 % und 6 %, insbesondere zwischen 0,1 % und 5,5 %, besonders bevorzugt zwischen 0,1 % und 4 %, insbesondere zwischen 0,1 % und 2 %, ganz bevorzugt zwischen 0,1 % und 1,5 %, liegt.

**10.** Abdeckscheibe für eine Anzeigeeinrichtung oder Monitorvorsatzscheibe oder Oberfläche für Eingaben nach einem der Ansprüche 1 bis 9
**dadurch gekennzeichnet, dass**
die Entspiegelungsbeschichtung einen der nachfolgenden Aufbauten umfasst bzw. mit nachfolgenden Auftragsverfahren aufgebracht wird:

a) die Entspiegelungsbeschichtung wird mit Hilfe einer Flüssigtechnologie aufgebracht, wobei die mit Hilfe der Flüssigtechnologie aufgebrachte Schicht mit Hilfe eine der nachfolgenden Techniken zur Verfügung gestellt wird:

- die Entspiegelungsbeschichtung wird mit Hilfe der Sol-Gel-Technologie aufgebracht;
- die Entspiegelungsbeschichtung wird als einfache Interferenzbeschichtung aus der Sol-Gel-Technologie hergestellt;
- die Entspiegelungsbeschichtung wird als Mehrfach-Interferenzbeschichtung aus der Sol-Gel-Technologie hergestellt, wobei die Mehrfach-Interferenzbeschichtung insbesondere eine Dreifach- bis Siebenfach-Interferenzbeschichtung ist;
- die Entspiegelungsbeschichtung wird als Dreifach-Interferenzbeschichtung aus der Sol-Gel-Technologie hergestellt, wobei die erste Schicht eine Brechzahl zwischen 1,6 und 1,8, die zweite Schicht eine Brechzahl zwischen 1,9 und 2,5 und die dritte Schicht eine Brechzahl zwischen 1,4 und 1,5 aufweist;

b) die Entspiegelungsbeschichtung wird mit Hilfe eine Hochvakuumtechnologie hergestellt, wobei die mit Hilfe der Hochvakuumtechnologie aufgebrachte Schicht mit einer der nachfolgenden Techniken zur Verfügung gestellt wird;

- die Entspiegelungsbeschichtung wird mit Hilfe einer Hochvakuumtechnologie als Mehrfach-Interferenzschichtsystem hergestellt, wobei die Mehrfach-Interferenzbeschichtung insbesondere eine Dreifach- bis Siebenfach-Interferenzbeschichtung ist;
- die Entspiegelungsbeschichtung wird mit Hilfe einer Hochvakuumtechnologie als Einfachschichtsystem hergestellt;
- die Entspiegelungsbeschichtung wird aus einem Sputterprozess unter Hochvakuum hergestellt;

- die Entspiegelungsbeschichtung wird aus einem Aufdampfprozess unter Hochvakuum hergestellt.

c) die Entspiegelungsbeschichtung wird mit Hilfe eines CVD-Verfahrens hergestellt, wobei die mit Hilfe eines CVD-Verfahrens aufgebrachte Beschichtung mit einer der nachfolgenden Techniken zur Verfügung gestellt wird:

- die Entspiegelungsbeschichtung wird aus einem Online-CVD-Prozess hergestellt;
- die Entspiegelungsbeschichtung wird aus einem Offline-CVD-Prozess hergestellt;

d) die Entspiegelungsbeschichtung wird mit Hilfe eines Ätzverfahrens hergestellt, wobei die mit Hilfe eines Ätzverfahrens aufgebrachte Schicht mit einer der nachfolgenden Techniken zur Verfügung gestellt wird:

- die Entspiegelungsbeschichtung wird mit Hilfe eines Ätzverfahrens als poröse Schicht hergestellt;
- die Entspiegelungsbeschichtung wird mit Hilfe eines Ätzverfahrens als lichtstreuende Oberfläche hergestellt.

**11.** Verwendung einer Abdeckscheibe für eine Anzeigeeinrichtung oder Monitorvorsatzscheibe oder Oberfläche für Eingaben nach einem der Ansprüche 1 bis 10, in einem der nachfolgenden Bereiche oder für eines der nachfolgenden Produkte:

- einer Anzeigeeinrichtungen;
- einem Teil eines Touchpanels;
- einem Teil eines Touchscreens mit optischer Abtastung.
- innerhalb eines Displaysystems als Touchpanel zur interaktiven Eingabe von Signalen. oder als Abdeck- und Schutzscheibe
- einer Schutzscheibe für Displays, Anzeigeeinrichtungen, Touchscreens

**12.** Verfahren zur Herstellung einer Abdeckscheibe für eine Anzeigeeinrichtung oder Monitorvorsatzscheibe oder Oberfläche für Eingaben, umfassend die Schritte:

- Bereitstellen eines Substrates
- eine Antireflexbeschichtung bzw. Entspiegelungsbeschichtung wird mit einer Flüssigtechnologie, insbesondere mit Sol-Gel-Technik oder mit Hochvakuumtechnologie oder mit Hilfe eines CVD-Verfahrens, auf das Substrat aufgebracht;
- das beschichtete Substrat wird in einen Unterdruckbehälter eingebracht, der auf ein Vakuum im Bereich von 10 Pa bis 1050 hPa, vorzugsweise 10 hPa - 500 hPa, eingestellt wird, wobei vorzugsweise als Vakuum ein Feinvakuum im Bereich zwischen 10 Pa und 100 Pa oder ein Grobvakuum oberhalb 100 Pa evakuiert wird;
- es wird auf die Beschichtung eine Deckschicht aufgebracht, derart, dass der Reibwert zwischen 0,01, und 0,12, bevorzugt zwischen 0,02 und 0,1, ganz bevorzugt zwischen 0,03 und 0,09 liegt.

**13.** Verfahren nach Anspruch 12,
**dadurch gekennzeichnet, dass**
zur Verminderung des Reibwertes der Beschichtung ein ultrahydrophobes Beschichtungsmaterial in einen Verdampfer gegeben wird, der sich in dem Unterdruckbehälter befindet und aus dem Verdampfer das ultrahydrophobe Beschichtungsmaterial verdampft wird und sich anschließend auf der Oberfläche des Substrates niederschlägt oder auf einer Beschichtung, insbesondere einer Antireflexbeschichtung bzw. Entspiegelungsschicht, eine Deckschicht ausbildet, so dass das Substrat oder die Deckschicht einen Reibwert zwischen 0,01 und 0,12, bevorzugt zwischen 0,02 und 0,1, insbesondere bevorzugt zwischen 0,03 und 0,09 liegt.

**14.** Verfahren nach Anspruch 13,
**dadurch gekennzeichnet, dass**
die Temperatur im Verdampfer zwischen 100° C und 400° C liegt.

**15.** Verfahren nach einem der Ansprüche 12 bis 14,
**dadurch gekennzeichnet, dass**
die Substrate eine Temperatur zwischen 300 K und 370 K aufweisen.

**16.** Verfahren nach einem der Ansprüche 12 bis 15,
**dadurch gekennzeichnet, dass**

die Dicke der Deckschicht < 20 nm, insbesondere < 10 nm ist, bevorzugt im Bereich 0,1 nm bis 10 nm liegt.

17. Verwendung eines Verfahrens nach einem der Ansprüche 14 bis 19 bei der Herstellung eines der nachfolgenden Produkte:

- Anzeigeeinrichtungen;
- einem Teil eines Touchpanels;
- einem Teil eines Touchscreens mit optischer Abtastung
- innerhalb eines Displaysystems als Touchpanel zur interaktiven Eingabe von Signalen oder als Abdeck- und Schutzscheibe
- einer Schutzscheibe für Displays, Anzeigeeinrichtungen, Touchscreens.

**Claims**

1. A cover pane for a display device or monitor viewing pane or a surface for inputs, comprising
a substrate;
a coating (110) applied onto the substrate (100),
**characterized in that**
the coating (110) comprises at least one anti-reflective coating (121.1) and the coating (110) comprises a cover layer (122) which is arranged above the anti-reflective coating (121.1), and the surface (112) of the cover layer has a coefficient of friction (tan $\alpha$) in the range of between 0.01 and 0.12, especially 0.02 and 0.1, more preferably 0.03 and 0.09, wherein
the substrate (100) is disk-shaped with a first (114.1) and a second side (114.2), and the coating (110) comprising the anti-reflective coating (121.1, 121.2) is applied onto the first (114.1) and/or second side (114.2) of the disk-shaped substrate, and the reflectivity $R_{vis}$ of the entire system lies between 0.1 % and 7%.

2. A cover pane according to claim 1, **characterized in that** the coating is selected in such a way that the adherence of organic substances, especially oils and skin grease, is substantially avoided.

3. A cover pane for a display device or monitor viewing pane or surface for inputs according to one of the claims 1 to 2, **characterized in that** the cover layer (122) has a thickness < 20 nm, especially less than 10 nm, preferably in the range of 0.1 nm to 10 nm.

4. A cover pane for a display device or monitor viewing pane or surface for inputs according to one of the claims 1 to 3, **characterized in that** the anti-reflective layer (121.1) is optically adapted to the cover layer (122) in such a way that an anti-reflective effect is provided.

5. A cover pane for a display device or monitor viewing pane or surface for inputs according to one of the claims 1 or 4, **characterized in that** the refractive index of the coating (110) or the cover layer lies between 1.37 and 1.6.

6. A cover pane for a display device or monitor viewing pane or surface for inputs according to one of the claims 1 to 5, **characterized in that** the substrate

- is a glass pane, especially a soda lime glass pane or a borosilicate glass pane, which is obtained by means of a drawing process, float technology or cast glass or rolled glass, or
- a plastic substrate, especially a Plexiglass substrate, or
- a laminated glass pane (205).

7. A cover pane for a display device or monitor viewing pane or surface for inputs according to one of the claims 1 to 6, **characterized in that** the substrate (100) has a thickness in the range of 0.05 mm and 10 mm, especially between 0.05 mm and 8 mm, more preferably in the range of 0.05 mm to 3 mm.

8. A cover pane for a display device or monitor viewing pane or surface for inputs according to one of the claims 1 to 7, **characterized in that** the coating (110) has a contact angle of > 50°, especially > 70°, more preferably > 80°, on the outwardly facing surface (112).

9. A cover pane according to one of the claims 1 to 8, **characterized in that** the reflectivity $R_{vis}$ of the entire system lies between 0.1 % and 6%, especially between 0.1 % and 5.5%, especially preferably between 0.1 % and 4%, especially between 0.1 % and 2%, more preferably between 0.1 % and 1.5%.

10. A cover pane for a display device or monitor viewing pane or surface for inputs according to one of the claims 1 to 9, **characterized in that** the anti-reflective coating comprises one of the following built-on accessories or is applied with the following application methods:

   a) the anti-reflective coating is applied by means of liquid technology, wherein the layer applied by means of liquid technology is made available by means of one of the following technologies:

   - the anti-reflective coating is applied by means of sol-gel technology;
   - the anti-reflective coating is produced as a simple interference coating from sol-gel technology;
   - the anti-reflective coating is produced as a multiple interference coating from sol-gel technology, wherein the multiple interference coating is especially a triple to sevenfold interference coating;
   - the anti-reflective coating is produced as a triple interference coating from sol-gel technology, wherein the first layer has a refractive index between 1.6 and 1.8, the second layer has a refractive index between 1.9 and 2.5, and the third layer has a refractive index between 1.4 and 1.5;

   b) the anti-reflective coating is produced by means of high-vacuum technology, wherein the layer applied by means of high-vacuum technology is provided by means of one of the following technologies:

   - the anti-reflective coating is produced by means of high-vacuum technology as a multiple interference layer system, wherein the multiple interference coating is especially a triple to sevenfold interference coating;
   - the anti-reflective coating is produced by means of high-vacuum technology as a single layer system;
   - the anti-reflective coating is produced by a sputtering process under high vacuum;
   - the anti-reflective coating is produced from a vapour-deposition process under high vacuum;

   c) the anti-reflective coating is produced by means of a CVD method, wherein the coating applied by means of a CVD method is provided by means of one of the following technologies:

   - the anti-reflective coating is produced from an online CVD process;
   - the anti-reflective coating is produced from an off-line CVD process;

   d) the anti-reflective coating is produced by means of an etching method, wherein the layer applied by means of an etching method is provided by means of one of the following technologies:

   - the anti-reflective coating is produced by means of an etching method as a porous layer;
   - the anti-reflective coating is produced by means of an etching method as a light-scattering surface.

11. The use of a cover pane for a display device or a monitor viewing pane or a surface for inputs according to one of the claims 1 to 10, in one of the following areas or for one of the following products:

   - a display device;
   - a part of a touch panel;
   - a part of a touchscreen with optical scanning;
   - within a display system as a touch panel for the interactive input of signals, or as a cover and protective pane;
   - a protective pane for displays, display devices, touchscreens.

12. A method for producing a cover pane for a display device or monitor viewing pane or surface for inputs, comprising the following steps:

   - providing a substrate;
   - an antireflection coating or anti-reflective coating is applied onto the substrate by means of liquid technology, especially sol-gel technology or high vacuum technology, or by means of a CVD method;
   - the coated substrate is introduced into a vacuum container, which is set to a vacuum in the range of 10 Pa to 1050 hPa, preferably 10 hPa to 500 hPa, wherein a fine vacuum in the range of 10 Pa and 100 Pa or a rough vacuum above 100 Pa is preferably evacuated as a vacuum;
   - a cover layer is applied onto the coating, such that the coefficient of friction lies between 0.01 and 0.12, preferably between 0.02 and 0.1, more preferably between 0.03 and 0.09.

13. A method according to claim 12, **characterized in that** an ultrahydrophobic coating material is entered into an evaporator for reducing the coefficient of friction of the coating, which evaporator is situated in the vacuum container, and the ultrahydrophobic coating material is evaporated from the evaporator, and subsequently deposits on the surface of the substrate or forms a cover layer on a coating, especially an antireflection coating or anti-reflective layer, so that the substrate or the cover layer has a coefficient of friction of between 0.01 and 0.12, preferably between 0.02 and 0.1, more preferably between 0.03 and 0.09.

14. A method according to claim 13, **characterized in that** the temperature in the evaporator lies between 100°C and 400°C.

15. A method according to one of the claims 12 to 14, **characterized in that** the substrates have a temperature of between 300 K and 370 K.

16. A method according to one of the claims 12 to 15, **characterized in that** thickness of the cover layer is < 20 nm, especially < 10 nm, preferably in the range of 0.1 nm to 10 nm.

17. The use of a method according to one of the claims 14 to 19 in the production of one of the following products:

- a display device;
- a part of a touch panel;
- a part of a touchscreen with optical scanning;
- within a display system as a touch panel for the interactive input of signals, or as a cover and protective pane;
- a protective pane for displays, display devices, touchscreens.

## Revendications

1. Plaque de couverture pour un dispositif d'affichage ou vitre de façade de moniteur ou surface de saisie, comprenant un substrat ;
un revêtement (110) appliqué sur le substrat (100),
**caractérisée en ce que**
le revêtement (110) comprend au moins un revêtement antireflets (121.1) et le revêtement (110) comporte une couche de couverture (122) qui est disposée par-dessus le revêtement antireflets (121.1) et la surface (112) de la couche de couverture présente un coefficient de frottement (tan $\alpha$) compris entre 0,01 et 0,12, en particulier entre 0,02 et 0,1, de préférence entre 0,03 et 0,09,
le substrat (100) étant en forme de plaque avec une première face (114.1) et une deuxième (114.2) et le revêtement (110) qui comprend le revêtement antireflets (121.1, 121.2) étant appliqué sur la première face (114.1) et/ou la deuxième (114.2) du substrat en forme de plaque,
et la réflectivité $R_{vis}$ du système dans son ensemble étant comprise entre 0,1 % est 7 %.

2. Plaque de couverture selon la revendication 1, **caractérisée en ce que** le revêtement est choisi de façon à éviter dans une grande mesure l'adhérence de substances organiques, en particulier dès huiles et du sébum.

3. Plaque de couverture pour un dispositif d'affichage ou vitre de façade de moniteur ou surface de saisie selon l'une des revendications 1 à 2, **caractérisée en ce que** la couche de couverture (122) présente une épaisseur de < 20 nm, en particulier moins de 10 nm, de préférence entre 0,1 nm et 10 nm.

4. Plaque de couverture pour un dispositif d'affichage ou vitre de façade de moniteur ou surface de saisie selon l'une des revendications 1 à 3, **caractérisée en ce que** la couche antireflets (121.1) est adaptée du point de vue optique à la couche de couverture (122) de façon à procurer un effet antireflets.

5. Plaque de couverture pour un dispositif d'affichage ou vitre de façade de moniteur ou surface de saisie selon la revendication 1 ou 4, **caractérisée en ce que** l'indice de réfraction du revêtement (110) ou de la couche de couverture est compris entre 1,37 et 1,6.

6. Plaque de couverture pour un dispositif d'affichage ou vitre de façade de moniteur ou surface de saisie selon l'une

**EP 2 490 828 B1**

des revendications 1 à 5, **caractérisée en ce que** le substrat (100) est
une vitre, en particulier une vitre en verre sodé calcique ou une vitre en verre borosilicate, qui est obtenue par étirage, par la technologie *float* ou en verre moulé ou laminé ou

- un substrat en matière plastique, en particulier un substrat en plexiglas ou
- une vitre en verre feuilleté (205).

7. Plaque de couverture pour un dispositif d'affichage ou vitre de façade de moniteur ou surface de saisie selon l'une des revendications 1 à 6, **caractérisée en ce que** le substrat (100) présente une épaisseur comprise entre 0,05 mm et 10 mm, en particulier entre 0,05 mm et 8 mm, de préférence entre 0,05 mm et 3 mm.

8. Plaque de couverture pour un dispositif d'affichage ou vitre de façade de moniteur ou surface de saisie selon l'une des revendications 1 à 7, **caractérisée en ce que** le revêtement (110) présente sur la surface orientée vers l'extérieur (112) un angle de contact de > 50°, en particulier de > 70°, de préférence de > 80°.

9. Plaque de couverture selon l'une des revendications 1 à 8, **caractérisée en ce que** la réflectivité réfléchissant $R_{vis}$ du système dans son ensemble est comprise entre 0,1 % et 6 %, en particulier entre 0,1 % et 5,5 %, de préférence entre 0,1 % et 4 %, en particulier entre 0,1 % et 2 % et notamment entre 0,1 % et 1,5 %.

10. Plaque de couverture pour un dispositif d'affichage ou vitre de façade de moniteur ou surface de saisie selon l'une des revendications 1 à 9, **caractérisée en ce que** le revêtement antireflets comprend l'une des structures suivantes ou est appliqué selon les procédés d'application suivants :

a) le revêtement antireflets est appliqué à l'aide d'une technologie en phase liquide, la couche appliquée à l'aide de la technologie en phase liquide étant produite à l'aide de l'une des techniques suivantes :

- le revêtement antireflets est appliqué à l'aide de la technologie sol-gel ;
- le revêtement antireflets est fabriqué sous la forme d'un revêtement d'interférence simple par la technologie sol-gel ;
- le revêtement antireflets est fabriqué sous la forme d'un revêtement d'interférence multiple par la technologie sol-gel, le revêtement d'interférence multiple étant en particulier un revêtement d'interférence triple à septuple ;
- le revêtement antireflets est fabriqué sous la forme d'un revêtement d'interférence triple par la technologie sol-gel la première couche ayant un indice de réfraction compris entre 1,6 et 1,8, la deuxième couche un indice de réfraction compris entre 1,9 et 2,5 et la troisième couche un indice de réfraction compris entre 1,4 et 1,5 ;

b) le revêtement antireflets est fabriqué à l'aide d'une technologie sous vide poussé, la couche appliquée à l'aide de la technologie sous vide poussé étant produite à l'aide de l'une des techniques suivantes :

- le revêtement antireflets est fabriqué à l'aide d'une technologie sous vide poussé sous la forme d'un revêtement d'interférence multiple, le revêtement d'interférence multiple étant en particulier un revêtement d'interférence triple à septuple ;
- le revêtement antireflets est fabriqué à l'aide d'une technologie sous vide poussé sous la forme d'un système en couche simple ;
- le revêtement antireflets est fabriqué par un procédé d'étincelage sous vide poussé ;
- le revêtement antireflets est fabriqué selon un procédé de dépôt en phase vapeur sous vide poussé ;

c) le revêtement antireflets est fabriqué à l'aide d'un procédé de dépôt chimique en phase vapeur, le revêtement appliqué à l'aide d'un procédé de dépôt chimique en phase vapeur étant produit à l'aide de l'une des techniques suivantes :

- le revêtement antireflets est fabriqué selon un procédé de CVD en ligne ; le revêtement antireflets est fabriqué selon un procédé de CVD hors ligne ;

d) le revêtement antireflets est fabriqué à l'aide d'un procédé d'attaque chimique, la couche appliquée à l'aide d'un procédé d'attaque chimique étant produite à l'aide de l'une des techniques suivantes :

- le revêtement antireflets est fabriqué sous la forme d'une couche poreuse à l'aide d'un procédé d'attaque chimique ;
- le revêtement antireflets est fabriqué sous la forme d'une surface diffusant la lumière à l'aide d'un procédé d'attaque chimique.

**11.** Utilisation d'une plaque de couverture pour un dispositif d'affichage ou vitre de façade de moniteur ou surface de saisie selon l'une des revendications 1 à 10, dans l'un des domaines suivants ou pour l'un des produits suivants :

un dispositif d'affichage ;
une partie d'un panneau tactile ;
une partie d'un écran tactile à détection optique ;
dans un système d'affichage, comme panneau tactile pour la saisie interactive de signaux, ou comme plaque de couverture ou de protection ;

- une plaque de protection pour des écrans, dispositifs d'affichage, écrans tactiles.

**12.** Procédé pour la fabrication d'une plaque de couverture pour un dispositif d'affichage ou vitre de façade de moniteur ou surface de saisie comprenant les étapes de :

- préparation d'un substrat ;
- application d'une couche antiréfléchissante ou d'un revêtement antireflets sur le substrat à l'aide d'une technologie en phase liquide, en particulier une technique sol-gel, ou d'une technologie sous vide poussé ou à l'aide d'un procédé de dépôt chimique en phase vapeur ;
- introduction du substrat enduit dans une enceinte en dépression réglée à un vide compris entre 10 Pa et 1050 hPa, de préférence entre 10 Pa et 500 hPa, le vide établi étant de préférence un vide fin compris entre 10 Pa et 100 Pa ou un vide poussé au-dessus de 100 Pa ;
- application sur le revêtement d'une couche de couverture, de telle manière que le coefficient de friction soit compris entre 0,01 et 0,12, de préférence entre 0,02 et 0,1, en particulier entre 0,03 et 0,09.

**13.** Procédé selon la revendication 12, **caractérisé en ce qu'**afin de réduire le coefficient de friction du revêtement, un matériau de revêtement ultra-hydrophobe est déposé dans un évaporateur qui se trouve dans l'enceinte en dépression et le matériau de revêtement ultra-hydrophobe s'évapore de l'évaporateur et se dépose ensuite sur la surface du substrat ou forme une couche de couverture sur un revêtement, en particulier un revêtement antireflet ou une couche antireflets, de sorte que le substrat ou la couche de couverture présente un coefficient de friction compris entre 0,01 et 0,12, de préférence entre 0,02 et 0,1, en particulier entre 0,03 et 0,09.

**14.** Procédé selon la revendication 13, **caractérisée en ce que** la température dans l'évaporateur est comprise entre 100°C et 400°C.

**15.** Procédé selon l'une des revendications 12 à 14, **caractérisée en ce que** les substrats présentent une température comprise entre 300 K et 370 K.

**16.** Procédé selon l'une des revendications 12 à 15, **caractérisée en ce que** l'épaisseur de la couche de couverture est < 20 nm, en particulier < 10 nm, de préférence comprise entre 0,1 nm et 10 nm.

**17.** Utilisation d'un procédé selon l'une des revendications 14 à 19 dans la fabrication de l'un des produits suivants :

- des dispositifs d'affichage ;
- une partie d'un panneau tactile ;
- une partie d'un écran tactile à détection optique ;
- dans un système d'affichage, comme panneau tactile pour la saisie interactive de signaux, ou comme plaque de couverture ou de protection ;
- une plaque de protection pour des écrans, d_ispositifs d'affichage, écrans tactiles.

# Fig.1

Gewicht

Probe

verschiebbarer Anschlag

14

15

17

20

α

a

12

b

Fig.2a

Fig.2b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19848591 A1
- US 6472017 B2
- DE 19829172 A1
- DE 102007058927 A1
- DE 3941797 A1
- DE 10213036 A1
- EP 0933377 A2
- EP 1816232 A